# EUROPEAN PATENT SPECIFICATION

(11) **EP 2 919 411 B1**
(45) Date of publication and mention of the grant of the patent: **20.02.2019**
(21) Application number: 14290060.4
(22) Date of filing: 10.03.2014
(51) Int. Cl.: H04L 5/14, H04L 5/16

(54) **Method for full duplex communication, network, node and computer program product**
Verfahren zur vollständigen Duplex-Kommunikation, Netzwerk, Knoten und Computerprogrammprodukt
Procédé de communication en duplex intégral, réseau, noeud et produit de programme informatique

(43) Date of publication of application: 16.09.2015
(73) Proprietor: Alcatel Lucent, 91620 Nozay (FR)
(72) Inventor: Claussen, Holger, 15 Dublin (IE); Lopez-Perez, David, 15 Dublin (IE)
(74) Representative: Nokia EPO representatives

(56) References cited:
- US-A1- 2013 021 954
- US-A1- 2013 286 873
- US-A1- 2013 301 486

## Description

### TECHNICAL FIELD

The present invention relates, in general, to the field of wireless telecommunications networks, and more specifically, although not exclusively, to full duplex communication within such networks.

### BACKGROUND

The useful part of the spectrum for wireless telecommunications is limited and is therefore an expensive commodity that cellular operators have spent large amounts on. As a result, they have a high interest in utilizing the spectrum as efficiently as possible. There are different approaches that can be used to increase the efficiency of spectrum use. Some examples are small cells, which are low-powered radio access nodes that can be used to offload traffic, multiple-input and multiple-output (MIMO) antennas, and improved data coding and modulation techniques.

Typically, in a network, different frequency bands are used for transmission and reception between user equipment (UE) and the network infrastructure. An alternative, that can increase efficiency, is to receive and transmit signals simultaneously in the same frequency bands of operation. However, some challenges for such schemes exist, such as designing transceivers that can deal with the need to cancel leakage/reflections of transmitted signals (self-interference) at the receiver. Interference cancellation algorithms can be used in the digital domain, however very high values of transmit leakage/reflections can saturate the receiver chain and require impractical ADC resolution. Improvements in transceiver architecture can mitigate these problems, and therefore enable a feasible approach for using full duplex communications in real channel environments. However, typically, very accurate channel estimations are required which is only feasible for point to point links where the channel remains static. For communications with mobile devices (UEs), where the channel can change quickly, this causes problems. In addition, the potential complexity of a transceiver geared to cancel leakage/reflections of transmitted signals at the receiver, while not typically an issue for a base station node deployment, would be too expensive to implement in UEs.

US2013/286873 describes systems for scheduling half duplex communication.

### SUMMARY

According to an example, there is provided a method for full duplex communication using a node in a wireless telecommunications network, including selecting a first set of resource elements of a resource block for downlink (DL) control channel data transmission by the node, and scheduling half-duplex user equipment (UE) in groups of two UEs for full duplex communication with the node wherein uplink (UL) transmissions to the node from the UEs use a second set of resource elements of the resource block different from the first set. A first and a second UE for a group of two UEs can be selected based on their location within the network in order to maximize a measure representing the path-loss from the first UE to the second UE. A first and a second UE for a group of two UEs can be selected based on their data rate requirements such that the first UE has a relatively higher data rate requirement and the second UE has a relatively lower data rate requirement. A transmission profile of respective ones of the UEs in a group can be modified to form a transmission beam from a UE to the node using one or more of multiple antennas of the UEs. A first and a second UE for a group of two UEs that include respective multiple antenna systems can be selected, and a transmission profile of respective ones of the UEs in the group can be modified using the multiple antennas to minimize interference between the first and second UEs. The transmission profile of respective ones of the UEs in the group can be modified to form a null in the direction of the other UE in the group. The first set of resource elements can be used for a pilot signal of the node, such as a common reference signal (CRS) for example. The first set of resource elements can comprise a reserved set of elements that are blanked or otherwise not available for UL use.

According to an example, there is provided a full-duplex node in a wireless telecommunications network, the node operable to select a first set of resource elements of a resource block for downlink (DL) control channel data transmission to half-duplex user equipment (UE) devices scheduled by the node into respective groups of two UEs for full duplex communication with the node wherein uplink (UL) transmissions to the node from the UEs use a second set of resource elements of the resource block different from the first set. The node can further be operable to select a first and a second UE for a group of two UEs using their location within the network relative to the node in order to maximize a measure representing the path-loss from the first UE to the second UE. The node can further be operable to select a first and a second UE for a group of two UEs based on their data rate requirements to maximize a difference between data rate requirements of the UEs such that the first UE has a relatively higher data rate requirement and the second UE has a relatively lower data rate requirement.

According to an example, there is provided a wireless telecommunications network including a full duplex node operable to select a first set of resource elements of a resource block for downlink (DL) control channel data transmission to half-duplex user equipment (UE) devices of the network and scheduled by the node into respective groups of two UEs for full duplex communication with the node wherein uplink (UL) transmissions to the node from the UEs use a second set of resource elements of the resource block different from the first set.

According to an example, there is provided a UE including a multiple antenna arrangement and forming one of a pair of UEs in a group communicatively coupled to a full-duplex node in a wireless telecommunications network operable to select a first set of resource elements of a resource block for DL control channel data transmission to the pair of UEs, the UE operable to transmit UL data to the node using a second set of resource elements of the resource block different from the first set. The UE can be operable to modify a transmission profile thereof using a multiple antenna arrangement in order to minimize interference between the pair of UEs.

According to an example, there is provided a computer program product, comprising a computer usable medium having computer readable program code embodied therein, said computer readable program code adapted to be executed to implement a method for full duplex communication using a node in a wireless telecommunications network as provided herein.

### BRIEF DESCRIPTION OF THE FIGURES

Embodiments will now be described, by way of example only, with reference to the accompanying drawings, in which:
Figure 1 is a schematic representation of a full-duplex node according to an example that is communicatively coupled to UEs in a wireless telecommunications network, according to an example;
Figure 2 is a schematic representation of how, in a given resource block, eight resources elements used to carry a common reference signal (CRS) in the downlink, which acts as pilot signal, are not used in the uplink, according to an example;
Figure 3 is a schematic representation of a full-duplex node according to an example that can be communicatively coupled to multiple UEs in a wireless telecommunications network according to an example;
Figure 4a is a schematic representation of a UE according to an example; and
Figure 4b is a schematic representation of a UE according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Full duplex wireless transmission can potentially double the available frequency spectrum and be one additional way for increasing the wireless network capacity. This means that a base station node can transmit and receive using the same frequency bands at the same time. According to an example, a method for re-using frequencies is proposed that allows full duplex communication in a base station node with mobile UEs. The approach enables the full benefits of full duplex communication (up to 2x capacity increase in the same bandwidth) per base station, while retaining backwards compatibility with standard UEs.

According to an example, methods and apparatus for full duplex transmissions at a base station node (transmit and receive re-using the same band using a transceiver) in combination with two UEs that use complementing half-duplex transmission at the same time for cellular communications (e.g., LTE) is provided. More specifically, uplink (UL) transmissions to a node from UEs do not use the resource elements of a resource block that are used to carry control channel data, such as pilot signals or other such information in the downlink (DL) from the node to UEs, thus avoiding UL-to-DL interference and allowing the proper decoding of such signals across the full-duplex base station coverage. That is, a full-duplex capable base station node in a wireless telecommunications network can select or otherwise reserve a first set of resource elements of a resource block for DL control channel data transmission by the node. The node can schedule half-duplex UEs in groups of two UEs for full duplex communication with the node, and in an example UL transmissions to the node from the UEs use a second set of resource elements of the resource block that are different from the first set.

The node can schedule UEs in order to minimize interference between groups of two UEs such that UEs for a group are selected in order to maximize the path-loss between the UEs of each group. Furthermore, UE requirements such as required data rates for the UL and the DL can be taken into account in the grouping (e.g. a high data rate UE is grouped with a low data rate UE which creates less interference in the re-used bands). In an example, an optimal allocation can be determined using a global search or other known optimization methods based on the channel estimates between the base station and between UEs.

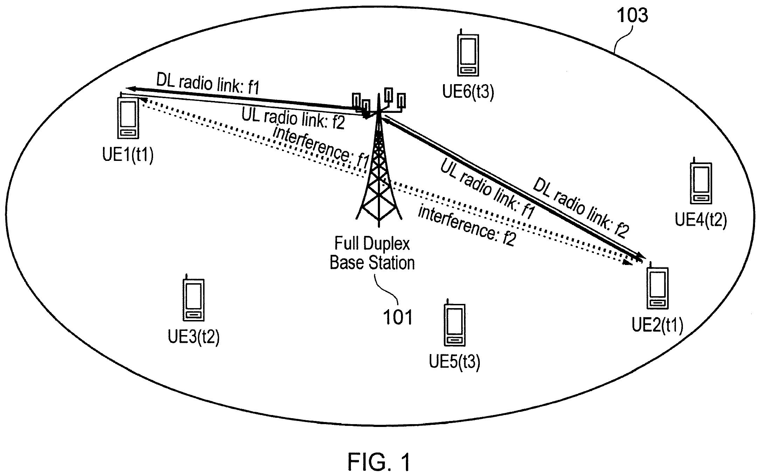

Figure 1 is a schematic representation of a full-duplex node according to an example that can be communicatively coupled to multiple UEs in a wireless telecommunications network. A full-duplex base station node 101 within a network provides wireless communication for UEs within a cell 103 of the network. Multiple UEs, UE1-6, are depicted in cell 103, and are within range of node 101. Each of the UEs is grouped into a pair that can communicate with node 101 during a specific time slot. For example, with reference to figure 1, UE1 and UE2 are grouped and communicate in a time slot t1. UE3 and UE4 are grouped and communicate in a different time slot, t2, and UE5 and UE6 are grouped and communicate in a yet a different time slot, t3.

According to an example, and considering a pair of UEs UE1 and UE2, node 101 performs full-duplex communication with these UEs using frequencies f1 and f2. More specifically, node 101 communicates using frequency f1 with UE1 in the DL and simultaneously with UE2 in the UL. Node 101 communicates using frequency f2 with UE1 in the UL and simultaneously with UE2 in the DL. In an example, UE1 and UE2 are selected to form a pair for a group of UEs based on their position within cell 103 with respect to the node 101. That is, UE1 and UE2 are located geographically far from one another, and so interference for frequencies f1 and f2 for full-duplex UL/DL communication using node 101 is minimized since path loss is maximized for this group.

Similarly, UE3 and UE4 can form a pair, and UE6 and UE5 can form a pair, these pairs of UEs being located at positions in cell 103 with respect to node 101 that maximize the distance between the UEs, thereby maximizing path-loss between the UEs. So, in the example of figure 1, once full-duplex communication with UEs UE1 and UE2 in timeslot t1 is complete, node 101 can perform full-duplex communication with UEs UE3 and UE4 in time slot t2, and UE6 and UE5 in timeslot t3, using frequencies f1 and f2 similarly to that described above.

Optionally, interference can be further reduced by exploiting multiple antennas of UEs in such a way that they form a beam towards their serving base station and/or null towards an interfering UE. Base station grouping can be optimized such that the interference nulling towards the second UE with multiple antennas is most effective. This will result in a different grouping compared to the case for single antenna mobiles as noted with respect to figure 1, and such a grouping concept is described in more detail below.

A frequency re-use scheme such as described above therefore results in the full benefits of full duplex at the system level (with 2 or more UEs, which is the case in macrocellular networks). That is, two times the bandwidth increase, which is the upper bound of the achievable capacity increase, and backwards compatibility with existing UEs since standard transceivers can be used.

Thus, to enable full duplex communication in wireless networks with mobile UEs, base station node 101 transmits in full duplex mode to two UEs at a time but each UE receives/transmits on complementing frequencies f1/f2, such that each UE only needs to operate in traditional but complementing half-duplex mode. This enables the doubling of the available bandwidth in both the uplink and the downlink direction, but creates new interference between UEs for both control and data channels, as shown in figure 1 (dotted lines between UEs UE1 and UE2 for example, with similar interference occurring for other UE pairs).

According to an example, a method for control channel configuration and scheduling is provided. In order to allow the proper decoding of control channel information, such as pilot signals or other information such as broadcast information in the DL all across the full-duplex base station coverage region, UL transmissions do not use the resource elements used to transmit such information in the DL. As a result, these resource elements will be free of UL-to-DL interference and control channel data, such as pilot signals (or other information) will merely experience the same interference conditions as in traditional systems.

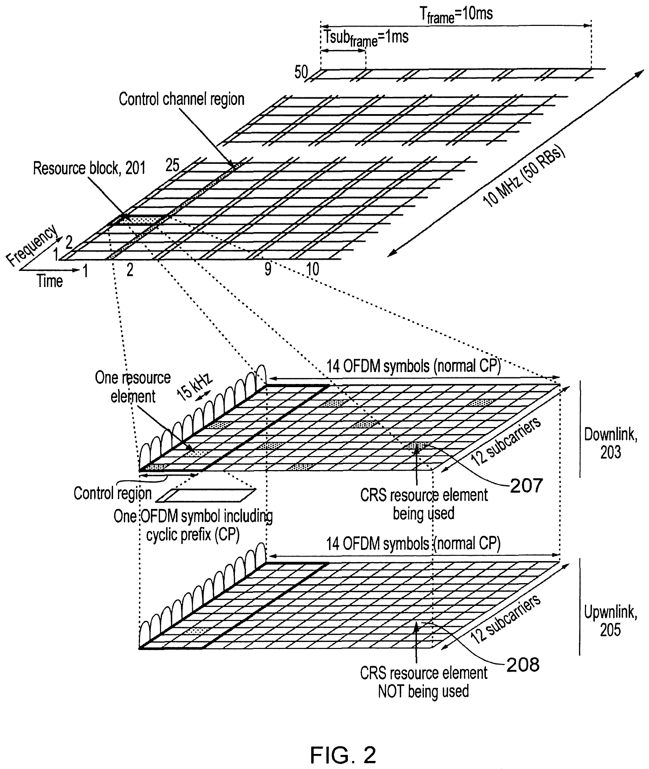

Figure 2 is a schematic representation of how, in a given resource block, eight resources elements used to carry data representing a common reference signal (CRS) in the DL, which acts as pilot signal, are not used in the UL according to an example. In this way, proper CRS estimation all across the full-duplex base station node coverage region is allowed.

A resource block 201 is shown in schematic expanded form for DL 203 and UL 205. Resource elements in block 201 are shaded in 203 indicating that the elements in question are reserved, selected or otherwise being used for control channel data in the DL, 203. As can be seen from 205, which shows the elements of block 201 for UL communication, corresponding elements are not shaded, indicating that are not being used. That is, the elements in DL 203 that are used for control channel information in block 201 are blanked for use in the uplink 205. The same blanking approach can be used to suppress UL interference to the primary synchronization signal, the secondary synchronization signal, and the broadcast channels, which are all transmitted in the DL. With reference to figure 2, it can therefore be seen, for example, that element 207 from block 201, which is an element that is reserved, used or otherwise selected for control channel information in DL communications is not used in the DL 208.

As described above, additional interference between UEs resulting from full duplex communication is minimized by grouping UEs in groups of 2 which, due to their location, have a high path-loss between them. The grouping of UEs that share the frequency bands at a given time can be optimized based on the channel information between the base station node and the UEs using known methods (e.g. global search, or other optimization approaches for example).

While the channels between the base station and the UEs can be readily measured using standardized methods during normal operation, the channel between UEs, on which the interference depends, cannot be reported easily.

The channels between UEs can be estimated based on UE location. Different approaches can be considered. For example, considering path-loss to the base station node, grouping one UE which is far away (high pathloss to base station node) with a UE which is close-by (low path-loss to base station node) will lead to a large distance between the UEs, resulting in high path-loss and low interference. Angle of arrival can be considered, whereby to select pairs of UEs that are located on opposite sides of the base station node (see for example in figure 1). Both path-loss and angle of arrival can be combined. RF fingerprinting can be used to identify UE locations more accurately, and/or triangulation and/or GPS feedback can be used.

During operation estimates can be refined by measurements. For example, if two UEs are scheduled in a group at the same time, the path loss can be estimated based on the transmit power amount of interference received.

With more advanced UEs that have the capability of using multiple antennas to form beams/cancel one strong interferer, an alternative (or complementary) user grouping scheme can be used in order to maximize interference cancellation efficiency. In an example, each UE can form a beam to the serving base station node, which in turn will reduce interference between UEs if they are grouped intelligently.

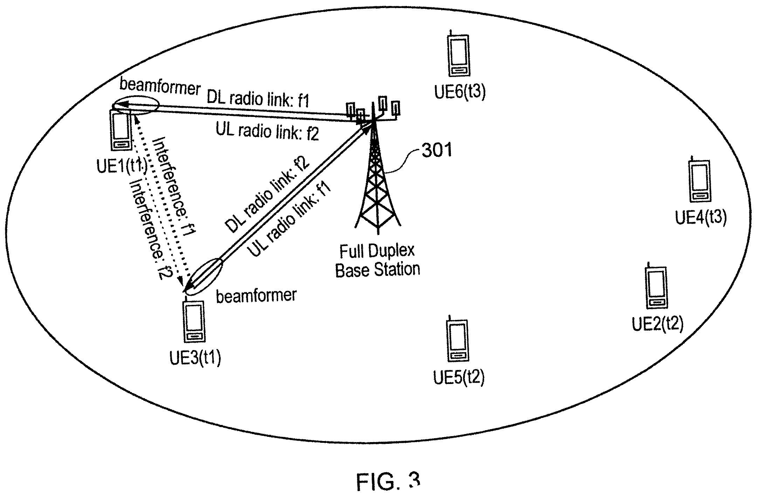

Figure 3 is a schematic representation of a full-duplex node according to an example that can be communicatively coupled to multiple UEs in a wireless telecommunications network according to an example. A full duplex base station node 301 is serving 6 users. The UEs are grouped in 3 groups of two UEs:
- Group 1: UE1, UE3 - transmitting in timeslot t1
- Group 2: UE2, UE5 - transmitting in timeslot t2
- Group 3: UE4, UE6 - transmitting in timeslot t3

In the example of figure 3, UEs UE1-6 include multiple antennas or an antenna with multiple antenna elements, that can be selected in isolation or in groups in order to modify a transmission profile of the UE, thereby forming a beam from the UE in question in a desired direction. The modified transmission profiles can therefore be used for beam forming and interference cancellation.

For example, with reference to figure 3, Group 1, comprising UE1 and UE3 transmitting in timeslot t1 communicate with full duplex node 301 using two frequency bands f1 and f2. More specifically, UE1 can communicate with node 301 using frequency f2 in the UL, whilst UE3 communicates with the node 301 using frequency f1 in the UL. Downlink communications from node 301 to UE1 are carried out using frequency band f1, whereas downlink communications from node 301 to UE2 are carried out using frequency band f2. Full-duplex node 301 receives UL data from UE3 at the same time as DL data is transmitted to UE1 for example.

UE1 and UE3 are operable to select antennas or antenna elements for transmission in order to form a beam with a directional profile that is directed towards node 301. As can be seen with reference to figure 3, beams are thus formed from UE1 and UE 3 to node 301. Beam forming for interference minimization can similarly be performed by groups 2 and 3 using antenna and/or element selection.

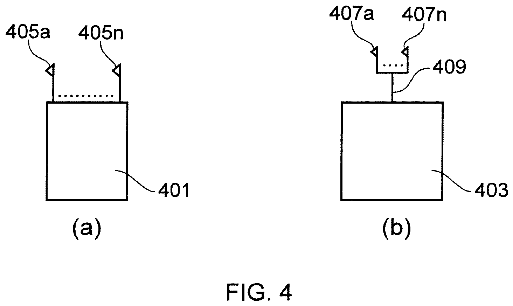

In this connection, figures 4a-b are schematic representations of a UE according to an example. In figure 4a a UE 401 is depicted with multiple antennas 405a-n. An antenna or multiple ones of the antennas 405a-n can be selected by UE 401 in order to modify an antenna profile of the UE in order to direct transmissions in certain direction(s) whereby to minimize interference as described above. In figure 4b, a UE 403 is depicted with multiple antenna elements 407a-n, which can be part of a single antenna 409 for the UE 403. An antenna element or multiple ones of the elements 407a-n can be selected by UE 403 in order to modify an antenna profile of the UE in order to direct transmissions in certain direction(s) whereby to minimize interference as described above.

The interference can be further reduced if information of the channel between the simultaneously scheduled UEs is available. In an example, the channel information can be measured at each UE by listening to the uplink pilot signal (for example the sounding reference signal (SRS) or demodulation reference signal (DM-RS) for LTE) transmitted by each UE for channel estimation by node 301 in the UL. Here, either a passive measurement approach can be considered, or information on the uplink pilots and their location within the radio frame can be shared by the node with the UEs in a pair for example.

Here, UEs are grouped such that the wanted signal and interference come from different directions, and such that the interference cancellation/beam forming scheme achieves maximum performance.

According to an example, UE demand can be taken into account for selecting the scheduling groups. For example, in order to minimize interference of high data rate UEs they can be grouped with low data rate UEs, which will generate less interference. For example, a first and a second UE for a group of two UEs can be selected based on their data rate requirements such that the first UE has a relatively higher data rate requirement and the second UE has a relatively lower data rate requirement. For example, the first UE can have a relatively higher data rate requirement compared to the data rate requirement of the second UE. In this way, a group of two UEs are selected, partly or wholly, on the basis that one of the pair is operating a higher data rate than the other. The difference in data rate requirement of UEs can be such that a selected pair of UEs have a maximum difference in their data rate requirement, and the data rate requirement of other UEs can be taken into account so that multiple groups of UEs can be selected such that the data rate requirement between the pairs of UEs in the multiple groups is such that the difference in the requirements between respective ones of the pairs of UEs is maximized. The concept can be also applied using the same principles to sectorized base station nodes in order to increase spatial re-use through beam-forming at the base station.

The methods and apparatus described herein can be applied using any air interface technology such as, for example LTE, UMTS, and so on. The concept can be applied to the whole available frequency spectrum or parts of the spectrum. In a multi-cell scenario, base station nodess can collaborate to select the UE groups in a manner to minimize global interference using the same techniques as described above (e.g. maximizing re-use distance, selection such that interference mitigation techniques such as beamforming are most effective).

Accordingly, usable bandwidth is increased by a factor of two, and the methods described are compatible with existing UE devices. Methods and apparatus as described can be complementary to other ways of increasing the network capacity such as with the use of small Cells, MIMO, and so on, and are applicable to use with any air interface such as LTE, UMTS, and so on.

The present inventions can be embodied in other specific apparatus and/or methods. The described embodiments are to be considered in all respects as illustrative and not restrictive. In particular, the scope of the invention is indicated by the appended claims rather than by the description and figures herein.

## Claims

1. A method for full duplex communication using a node (101, 301) in a wireless telecommunications network, including:
selecting a first set of resource elements of a resource block for downlink (DL) control channel data transmission by the node (101, 301); and **characterized by**,
scheduling half-duplex user equipment, UE, in groups of two UEs for full duplex communication with the node (101, 301) wherein uplink, UL, transmissions to the node (101, 301) from the UEs use a second set of resource elements of the resource block different from the first set.

2. A method as claimed in claim 1, wherein a first and a second UE for a group of two UEs are selected based on their location within the network in order to maximize a measure representing the path-loss from the first UE to the second UE.

3. A method as claimed in claim 1, wherein a first and a second UE for a group of two UEs are selected based on their data rate requirements such that the first UE has a relatively higher data rate requirement and the second UE has a relatively lower data rate requirement.

4. A method as claimed in any preceding claim, further including modifying a transmission profile of respective ones of the UEs in a group to form a transmission beam from a UE to the node using one or more of multiple antennas or antenna elements of the UEs.

5. A method as claimed in claim 1, further including selecting a first and a second UE for a group of two UEs that include respective multiple antenna systems, and modifying a transmission profile of respective ones of the UEs in the group using the multiple antennas to minimize interference between the first and second UEs.

6. A method as claimed in claim 5, wherein the transmission profile of respective ones of the UEs in the group is modified to form a null in the direction of the other UE in the group.

7. A method as claimed in any preceding claim, wherein the first set of resource elements is used for a pilot signal of the node (101, 301), such as a common reference signal, CRS.

8. A method as claimed in any of claims 1 to 6, wherein the first set of resource elements comprise a reserved set of elements that are blanked or otherwise not available for UL use.

9. A full-duplex node (101, 301) in a wireless telecommunications network, the node operable to:
select a first set of resource elements of a resource block for downlink (DL) control channel data transmission to half-duplex user equipment, UE, devices; and
schedule half-duplex UE into groups of two UEs for full duplex communication with the node (101, 301) wherein uplink, UL, transmissions to the node (101, 301) from the UEs use a second set of resource elements of the resource block different from the first set.

10. A full-duplex node (101, 301) as claimed in claim 9, further operable to select a first and a second UE for a group of two UEs using their location within the network relative to the node (101, 301) in order to maximize a measure representing the path-loss from the first UE to the second UE.

11. A full-duplex node (101, 301) as claimed in claim 9 or 10, further operable to select a first and a second UE for a group of two UEs based on their data rate requirements to maximize a difference between data rate requirements of the UEs such that the first UE has a relatively higher data rate requirement and the second UE has a relatively lower data rate requirement.

12. A wireless telecommunications network including a full duplex node (101, 301) operable to select a first set of resource elements of a resource block for downlink, DL, control channel data transmission to half-duplex user equipment, UE, devices of the network and scheduled by the node (101, 301) into respective groups of two UEs for full duplex communication with the node (101, 301) wherein uplink, UL, transmissions to the node (101, 301) from the UEs use a second set of resource elements of the resource block different from the first set.

13. A UE (401, 403) including a multiple antenna arrangement and forming one of a pair of UEs in a group communicatively coupled to a full-duplex node (101, 301) in a wireless telecommunications network operable to select a first set of resource elements of a resource block for DL control channel data transmission to at least the pair of UEs, **characterized in that** the UE is operable to transmit UL data to the node (101, 301) using a second set of resource elements of the resource block different from the first set.

14. A UE (401, 403) as claimed in claim 13, wherein the UE is operable to modify a transmission profile thereof using a multiple antenna arrangement in order to minimize interference between the pair of UEs.

15. A computer program product, comprising a computer usable medium having computer readable program code embodied therein, said computer readable program code adapted to be executed to implement a method for full duplex communication using a node in a wireless telecommunications network as claimed in any of claims 1 to 8.

## Patentansprüche

1. Verfahren zur Vollduplexkommunikation unter Verwendung eines Knotens (101, 301) in einem drahtlosen Telekommunikationsnetzwerk, aufweisend:
Auswählen einer ersten Gruppe von Ressourcenelementen eines Ressourcenblocks zur Downlink-(DL)-Steuerkanal-Datenübertragung durch den Knoten (101, 301); und **gekennzeichnet durch**
Einteilen von Vollduplex-Benutzer-Equipment, UE, in Gruppen von zwei UEs zur Vollduplexkommunikation mit dem Knoten (101, 301), wobei Uplink-(UL)-Übertragungen zum Knoten (101, 301) von den UEs eine zweite, von der ersten Gruppe unterschiedliche Gruppe von Ressourcenelementen des Ressourcenblocks verwenden.

2. Verfahren nach Anspruch 1, wobei ein erstes und ein zweites UE für eine Gruppe von zwei UEs ausgewählt werden basierend auf ihrer Position im Netzwerk, um ein Maß zu maximieren, das den Pfadverlust vom ersten UE zum zweiten UE wiedergibt.

3. Verfahren nach Anspruch 1, wobei ein erstes und ein zweites UE für eine Gruppe von zwei UEs ausgewählt werden basierend auf ihren Datenratenanforderungen, sodass das erste UE eine relativ höhere Datenratenanforderung aufweist und das zweite UE eine relativ niedrigere Datenratenanforderung aufweist.

4. Verfahren nach einem der vorstehenden Ansprüche, ferner aufweisend das Modifizieren eines Übertragungsprofils entsprechender UEs der UEs in einer Gruppe, um einen Übertragungsstrahl von einem UE zum Knoten unter Verwendung von einer oder mehreren Antennen oder Antennenelementen der UEs zu bilden.

5. Verfahren nach Anspruch 1, ferner aufweisend das Auswählen eines ersten und zweiten UE für eine Gruppe von zwei UEs, die entsprechende Mehrantennensysteme aufweisen, und das Modifizieren eines Übertragungsprofils entsprechender UEs der UEs in der Gruppe unter Verwendung der mehreren Antennen, um Interferenz zwischen den ersten und zweiten UEs zu minimieren.

6. Verfahren nach Anspruch 5, wobei das Übertragungsprofil entsprechender UEs der UEs in der Gruppe modifiziert ist, um eine Null in der Richtung der anderen UEs in der Gruppe zu bilden.

7. Verfahren nach einem der vorstehenden Ansprüche, wobei die erste Gruppe von Ressourcenelementen verwendet wird für ein Pilotsignal des Knotens (101, 301), wie ein allgemeines Referenzsignal CRS.

8. Verfahren nach einem der Ansprüche 1 bis 6, wobei die erste Gruppe von Ressourcenelementen eine reservierte Gruppe von Elementen umfasst, die gelöscht oder sonst wie nicht für die UL-Verwendung verfügbar sind.

9. Vollduplexknoten (101, 301) in einem drahtlosen Telekommunikationsnetzwerk, wobei der Knoten betreibbar ist zum:
Auswählen einer ersten Gruppe von Ressourcenelementen eines Ressourcenblocks zur Downlink-(DL)-Steuerkanal-Datenübertragung zu Halbduplex-Benutzer-Equipment-UE-Einrichtungen; und
Einteilen von Halbduplex-UE in Gruppen von zwei UEs zur Vollduplexkommunikation mit dem Knoten (101, 301), wobei Uplink-(UL)-Übertragungen zum Knoten (101, 301) von den UEs eine zweite, von der ersten Gruppe unterschiedliche Gruppe von Ressourcenelementen des Ressourcenblocks verwenden.

10. Vollduplexknoten (101, 301) nach Anspruch 9, ferner betreibbar zum Auswählen eines ersten und eines zweiten UE für eine Gruppe von zwei UEs unter Verwendung ihrer Position im Netzwerk relativ zum Knoten (101, 301), um ein Maß zu maximieren, das den Pfadverlust vom ersten UE zum zweiten UE wiedergibt.

11. Vollduplexknoten (101, 301) nach Anspruch 9 oder 10, ferner betreibbar zum Auswählen eines ersten und eines zweiten UE für eine Gruppe von zwei UEs basierend auf ihren Datenratenanforderungen zum Maximieren einer Differenz zwischen Datenratenanforderungen der UEs, sodass das erste UE eine relativ höhere Datenratenanforderung aufweist und das zweite UE eine relativ niedrigere Datenratenanforderung aufweist.

12. Drahtloses Telekommunikationsnetzwerk, aufweisend einen Vollduplexknoten (101, 301), betreibbar zum Auswählen einer ersten Gruppe von Ressourcenelementen eines Ressourcenblocks zur Downlink-(DL)-Steuerkanal-Datenübertragung zu Halbduplex-Benutzer-Equipment-UE-Einrichtungen des Netzwerks und eingeteilt durch den Knoten (101, 301) in entsprechende Gruppen von zwei UEs zur Vollduplexkommunikation mit dem Knoten (101, 301), wobei Uplink-(UL)-Übertragungen zum Knoten (101, 301) von den UEs eine zweite, von der ersten Gruppe unterschiedliche Gruppe von Ressourcenelementen des Ressourcenblocks verwenden.

13. UE (401, 403), aufweisend eine Mehrantennenanordnung und bildend eine UE eines Paars von UEs in einer Gruppe, kommunikativ gekoppelt mit einem Vollduplexknoten (101, 301) in einem drahtlosen Telekommunikationsnetzwerk, betreibbar zum Auswählen einer ersten Gruppe von Ressourcenelementen eines Ressourcenblocks zur DL-Steuerkanal-Datenübertragung zu mindestens dem Paar von UEs, **dadurch gekennzeichnet, dass** die UE betreibbar ist zum Übertragen von UL-Daten zum Knoten (101, 301) unter Verwendung einer zweiten, von der ersten Gruppe unterschiedlichen Gruppe von Ressourcenelementen des Ressourcenblocks.

14. UE (401, 403) nach Anspruch 13, wobei das UE betreibbar ist zum Modifizieren eines Übertragungsprofils davon unter Verwendung einer Mehrantennenanordnung, um Interferenz zwischen dem Paar von UEs zu minimieren.

15. Rechnerprogrammprodukt, umfassend ein rechnerverwendbares Medium, aufweisend darin eingefügten rechnerlesbaren Programmcode, wobei der rechnerlesbare Programmcode eingerichtet ist, um ausgeführt zu werden, um ein Verfahren zur Vollduplexkommunikation unter Verwendung eines Knotens in einem drahtlosen Telekommunikationsnetzwerk nach einem der Ansprüche 1 bis 8 zu implementieren.

## Revendications

1. Procédé de communication en duplex intégral utilisant un noeud (101, 301) d'un réseau de télécommunications sans fil, comprenant :
la sélection d'un premier ensemble d'éléments de ressources d'un bloc de ressources pour l'émission de données de canal de commande de liaison descendante (DL) par le noeud (101, 301) ; et **caractérisée par**,
la répartition d'équipements d'utilisateur, UE, en semi-duplex dans des groupes de deux UE pour la communication en duplex intégral avec le noeud (101, 301), dans lequel procédé les émissions de liaison montante, UL, vers le noeud (101, 301) en provenance des UE utilisent un deuxième ensemble d'éléments de ressources du bloc de ressources, différent du premier ensemble.

2. Procédé selon la revendication 1, dans lequel un premier UE et un deuxième UE destinés à un groupe de deux UE sont sélectionnées en fonction de leur emplacement à l'intérieur du réseau afin de rendre maximale une mesure représentant la perte de trajet entre le premier UE et le deuxième UE.

3. Procédé selon la revendication 1, dans lequel un premier UE et un deuxième UE destinés à un groupe de deux UE sont sélectionnées en fonction de leurs exigences de débit de données, de telle façon que le premier UE ait une exigence de débit de données relativement plus élevée et que le deuxième UE ait une exigence de débit de données relativement plus faible.

4. Procédé selon l'une quelconque des revendications précédentes, comprenant également la modification d'un profil d'émission d'UE respectifs faisant partie des UE d'un groupe pour former un faisceau d'émission entre un UE et le noeud en utilisant une ou plusieurs antennes d'une pluralité d'antennes ou d'éléments d'antennes des UE.

5. Procédé selon la revendication 1, comprenant également la sélection d'un premier UE et d'un deuxième UE destinés à un groupe de deux UE qui contiennent des systèmes d'antennes multiples respectifs, et la modification d'un profil d'émission d'UE respectifs faisant partie des UE du groupe à l'aide des antennes multiples pour réduire au maximum l'interférence entre le premier UE et le deuxième UE.

6. Procédé selon la revendication 5, dans lequel le profil d'émission d'UE respectifs faisant partie des UE du groupe est modifié pour former une extinction dans la direction des autres UE du groupe.

7. Procédé selon l'une quelconque des revendications précédentes, dans lequel le premier ensemble d'éléments de ressources est utilisé pour un signal pilote du noeud (101, 301), par exemple un signal de référence commun, CRS.

8. Procédé selon l'une quelconque des revendications 1 à 6, dans lequel le premier ensemble d'éléments de ressources comprend un ensemble réservé d'éléments qui sont muets ou qui sinon ne sont pas disponibles pour l'utilisation en UL.

9. Noeud en duplex intégral (101, 301) d'un réseau de télécommunications sans fil, le noeud étant capable de :
sélectionner un premier ensemble d'éléments de ressources d'un bloc de ressources pour l'émission de données de canal de commande de liaison descendante (DL) vers des dispositifs d'équipement d'utilisateur, UE, en semi-duplex ; et
répartir des UE en semi-duplex en groupes de deux UE pour la communication en duplex intégral avec le noeud (101, 301), dans lequel noeud les émissions de liaison montante, UL, vers le noeud (101, 301) en provenance des UE utilisent un deuxième ensemble d'éléments de ressources du bloc de ressources, différent du premier ensemble.

10. Noeud en duplex intégral (101, 301) selon la revendication 9, également capable de sélectionner un premier UE et un deuxième UE destinés à un groupe de deux UE à l'aide de leur emplacement à l'intérieur du réseau par rapport au noeud (101, 301), afin de rendre maximale une mesure représentant la perte de trajet entre le premier UE et le deuxième UE.

11. Noeud en duplex intégral (101, 301) selon la revendication 9 ou 10, également capable de sélectionner un premier UE et un deuxième UE destinés à un groupe de deux UE en fonction de leurs exigences de débit de données, afin de rendre maximale une différence entre les exigences de débit de données des UE, de telle façon que le premier UE ait une exigence de débit de données relativement plus élevée et que le deuxième UE ait une exigence de débit de données relativement plus faible.

12. Réseau de télécommunications sans fil contenant un noeud en duplex intégral (101, 301) capable de sélectionner un premier ensemble d'éléments de ressources d'un bloc de ressources pour l'émission de données de canal de commande de liaison descendante, DL, vers des dispositifs d'équipement d'utilisateur, UE, du réseau et répartis par le noeud (101, 301) en groupes respectifs de deux UE pour la communication en duplex intégral avec le noeud (101, 301), dans lequel réseau les émissions de liaison montante, UL, vers le noeud (101, 301) en provenance des UE utilisent un deuxième ensemble d'éléments de ressources du bloc de ressources, différent du premier ensemble.

13. UE (401, 403) contenant un agencement d'antennes multiples et formant un UE d'une paire d'UE d'un groupe couplé par des communications à un noeud en duplex intégral (101, 301) d'un réseau de télécommunications sans fil capable de sélectionner un premier ensemble d'éléments de ressources d'un bloc de ressources pour l'émission de données de canal de commande DL vers au moins la paire d'UE, l'UE étant **caractérisé par** sa capacité à envoyer des données DL au noeud (101, 301) en utilisant un deuxième ensemble d'éléments de ressources du bloc de ressources, différent du premier ensemble.

14. UE (401, 403) selon la revendication 13, l'UE étant capable de modifier un profil d'émission le concernant en utilisant un agencement d'antennes multiples afin de réduire au maximum l'interférence entre les UE de la paire d'UE.

15. Produit de programme informatique, comprenant un support utilisable par un ordinateur dans lequel un code de programme lisible par ordinateur est enregistré, ledit code de programme lisible par ordinateur étant conçu pour être exécuté afin de mettre en oeuvre un procédé de communication en duplex intégral utilisant un noeud d'un réseau de télécommunications sans fil selon l'une quelconque des revendications 1 à 8.
